Europäisches Patentamt

European Patent Office

Office européen des brevets

(19)

(11) **EP 1 420 556 A2**

## (12) EUROPEAN PATENT APPLICATION

(43) Date of publication:
**19.05.2004 Bulletin 2004/21**

(51) Int Cl.⁷: **H04L 25/02**

(21) Application number: **03257186.1**

(22) Date of filing: **14.11.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **15.11.2002 US 295270**

(71) Applicant: **STMicroelectronics, Inc.
Carrollton Texas 75006-5039 (US)**

(72) Inventor: **Xianbin, Wang
Nepean, Ontario Canada, K2G 3S1 (CA)**

(74) Representative: **Style, Kelda Camilla Karen et al
Page White & Farrer,
54 Doughty Street
London WC1N 2LS (GB)**

## (54) Filter bank for long Ethernet links

(57) An asymmetrical 10Base-T transceiver structure is proposed that allows for communication over extended length (greater than 100 meters) UTP cables. Using an extended range transceiver, the channel distortion effect experienced with extended length cable communications is compensated for. This extended range transceiver includes a compensation filter bank whose transfer function is selectively tuned to suppress the adverse effects of channel distortion on either or both the transmit or receive side. Tuning of the filter bank transfer function is based on an estimate (manually or automatically obtained) of the cable length.

FIG. 3

EP 1 420 556 A2

**Description**

The present invention relates to ethernet transceivers and, in particular, to an ethernet transceiver configured for supporting long reach communications over unshielded twisted pair lines.

A new ethernet media standard referred to as "10Base-T" was proposed and accepted in 1990. Ethernet architectures according to the 10Base-T ethernet standard comprise a star topology, wherein a plurality of remote nodes radiate from a central hub or multiport bridge. Each remote node includes a transceiver which communicates with a corresponding transceiver in the hub. Unlike single communications channel coaxial-cable based architectures, each remote node in the 10Base-T ethernet architecture employs two pairs of unshielded twisted-pair (UTP) telephony grade cable as the transmission media, one pair for transmitting and one pair for receiving. A transceiver is provided in the central hub for each node, as well as circuitry which switches all signals transmitted from one remote node to the other remote node for which it is intended.

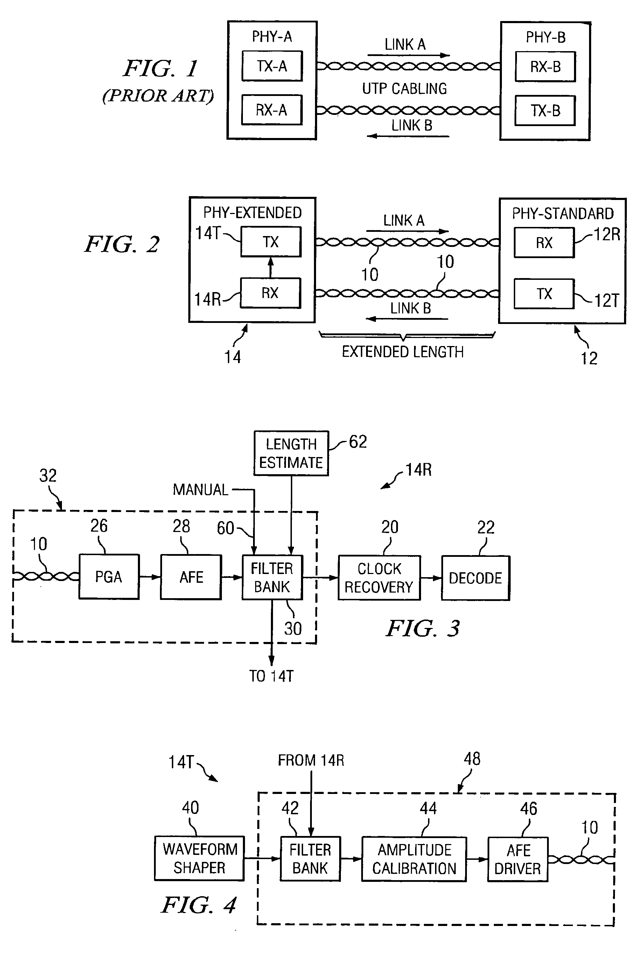

The conventional transceiver interconnection for 10Base-T communications is illustrated in FIGURE 1. Any duplex 10Base-T communications process involves two 10Base-T physical layer transmitting and receiving devices (PHY). These two PHYs are symmetrical and are both IEEE802.3 standard compliant. In this context, the term "symmetrical" refers to the signal propagation loops for link A and link B being identical. The term also refers to the transmitter A and transmitter B (and correspondingly the receiver A and receiver B) sharing similar capabilities (for example, equivalent channel distortion, spectrum and timing requirements according to IEEE802.3) even though they may be obtained from different manufacturers.

The noise environment for a 10Base-T receiver exhibits a number of major impairments to reception including, for example, near-end crosstalk (NEXT), channel attenuation, intersymbol interference and thermal noise. Both channel attenuation and intersymbol interference are derived from the channel distortion introduced by the use of UTP links.

The maximum UTP cable length for 10Base-T communications in accordance with the IEEE802.3 standard is specified at 100 meters. At this distance, the impulse response duration of the 10Base-T UTP cable is much shorter than 10Base-T symbol duration. As a result, intersymbol interference may be neglected as one of the impairments to reception in standard compliant 10Base-T PHY design. Put another way, in a standard compliant communications system, the preceding and forthcoming 10Base-T symbols have no adverse effect on the reception of the current symbol. If intersymbol interference can be ignored, the design of a standard compliant 10Base-T PHY is greatly simplified because no equalization is required.

However, if the length of the UTP cable is extended beyond 100 meters, intersymbol interference now becomes a significant concern and an impairment to reception because the channel impulse response duration increases with length and adjacent 10Base-T symbols eventually begin to conflict. An additional concern that complicates the design of the receiver is that attenuation is proportional to cable length and eventually becomes so large that the received signal must be amplified. As a result, it becomes extremely difficult to support communications with conventional 10Base-T transceivers in a symmetrical environment when UTP cable length extends to and exceeds 200 meters.

In the event 10Base-T communications are desired over UTP cables of extended length (for example, approaching or exceeding 200 meters), a new transceiver design is needed. The present invention addresses this and other needs.

The present invention comprises a long reach transceiver for connection to a cable of a certain length. The transceiver includes a transmitter path having a first filter. This first filter possesses a first transfer function that is selectively tuneable to effectuate a predistortion of a transmit signal. The signal predistortion compensates for a channel effect caused by signal transmission over the certain length cable. The transceiver further includes a receiver path including a second filter. Thus second filter possesses a second transfer function that is selectively tuneable to operate on a receive signal in a manner such that it compensates for the channel effect caused by signal transmission over the certain length cable.

Preferably, the transceiver is a 10Base-T transceiver, and the cable is an unshielded twisted pair ethernet cable.

A method for communication is also presented wherein a transmit signal is predistorted to compensate for a channel effect introduced on the transmit signal due to propagation over an extended length cable. This is preferably accomplished through a filtering action taken on the transmit signal wherein a filter transfer function is selectively chosen such that it, when combined with a transfer function of the extended length cable, produces a substantially flat frequency response.

Similarly, a receive signal is processed to compensate for a channel effect introduced on the receive signal due to propagation over an extended length cable. This is preferably accomplished through a filtering action taken on the receive signal wherein a filter transfer function is selectively chosen such that it, when combined with a transfer function of the extended length cable, produces a substantially flat frequency response.

A more complete understanding of the method and apparatus of the present invention may be acquired by reference to the following Detailed Description when taken in conjunction with the accompanying Drawings wherein:

FIGURE 1, previously described, is a block diagram of a conventional transceiver interconnection for supporting 10Base-T communications;

FIGURE 2 is a block diagram of a transceiver interconnection for supporting extended length 10Base-T communications;

FIGURE 3 is a block diagram of the receiver portion for the extended length 10Base-T PHY;

FIGURE 4 is a block diagram of the transmitter portion for the extended length 10Base-T PHY;

FIGURE 5 is a block diagram of a filter bank used within the transceiver; and

FIGURE 6 is a block diagram of an alternative filter bank used within the transceiver.

Reference is now made to FIGURE 2 wherein there is shown a block diagram of the transceiver interconnection for extended length 10Base-T communications. At one end of the UTP communications cable 10, an IEEE802.3 standard compliant 10Base-T PHY 12 is used. At the other end of the cable 10, an extended length 10Base-T PHY 14 in accordance with the present invention is used (which may be implemented as one or more integrated circuit chips). This configuration may be viewed, in comparison and contrast to that shown in FIGURE 1, as asymmetrical. In this context, the term "asymmetrical" refers to the fact that the propagation path for the signal transmitted over link A is not identical to that of link B. The reasons for this will be explained in detail later.

As discussed above, the receiver portion 12R for the standard compliant 10Base-T PHY 12 can only tolerate the channel effect of the 10Base-T cable 10 being up to approximately 100 meters. With respect to the transmitter portion 12T, it is recognized that its transmitted waveform will meet the templates and spectrum requirements as specified in the 10Base-T IEEE802.3 standard.

Turning now to the extended length 10Base-T PHY 14, the transmitter portion 14T must be configured in a manner to suppress the channel distortion that would otherwise be introduced by the presence of the extended length cable 10. With respect to the receiver portion 14R, it must be configured to compensate for the channel effect introduced by the presence of the extended length cable 10. If both of these configuration can be accomplished, then the other side of the cable 10 can advantageously utilize the standard compliant 10Base-T PHY 12. This helps reduce the cost and complexity of communication device installation for supporting extended reach 10Base-T communications. It is thus the focus of the present invention to effectuate the configuration of the transmitter portion 14T and receiver portion 14R for the extended length 10Base-T PHY 14 that is necessary to support communications over the extended length cable 10. More particularly, this is accomplished by configuring the extended length 10Base-T PHY 14 to compensate for the channel effect due to the extended cable 10 length through the use filters in the transmit and receive signal paths. These filters are provided at both the transmitter portion 14T and receiver portion 14R.

Reference is now made to FIGURE 3 wherein there is shown a block diagram of the receiver portion 14R for the extended length 10Base-T PHY 14. The receiver portion 14R is essentially of standard design including a clock recovery circuit 20 and Manchester decoder 22 that operate in a manner well known to those skilled in the art. The receive signal path for the receiver portion 14R further includes, in series connection, a programmable gain amplifier (PGA) 26, an analog front end (AFE) 28 and a filter bank 30. The PGA 26 operates to select an amplification gain to be applied to the received signal for the purpose of addressing attenuation concerns and thus improve reception quality. The AFE 28 operates to implement low filtering of the received signal for the purpose of rejecting noise components present therein. The filter bank 30 is used for implementing channel compensation with respect to the extended length cable 10 in a manner to be described.

A region 32 of the receive signal path is identified in FIGURE 3 to include the PGA 26, AFE 28, filter bank 30 and extended length cable 10. In order to support the receipt of standard compliant 10Base-T signals generated by the standard compliant 10Base-T PHY 12 and transmitted over the extended length cable 10, the filter bank 30 must operate in a manner to compensate for the channel effect. This is accomplished by having the transfer function of the filter bank 30 be selectable and/or tunable such that the overall (i.e., combined) transfer function of the region 32 is as flat as possible over the frequency range of 10Base-T communications (i.e., approximately less than 20MHz). More precisely, it would be preferred if the overall transfer function were substantially flat over the required transmission frequency range.

Reference is now made to FIGURE 4 wherein there is shown a block diagram of the transmitter portion 14T for the extended length 10Base-T PHY 14. The transmitter portion 14T is essentially of standard design including a Manchester waveform shaper 40 that operates in a manner well known to those skilled in the art. The transmit signal path for the transmitter portion 14T further includes, in series connection, a filter bank 42, amplitude calibration circuit 44 and an analog front end (AFE) driver 46. The amplitude calibration circuit 44 operates to control the amplitude of the transmitted signal and ensure that it remains within the IEEE802.3 amplitude requirements for 10Base-T signals (for example, three volts). The AFE driver 46 operates to limit the spectrum of the transmitted signal to meet the IEEE802.3 spectrum requirements. The filter bank 42 is used for implementing predistortion with respect to the extended length cable 10 in a manner to be described.

A region 48 of the transmit signal path is identified in

FIGURE 4 to include the filter bank 42, amplitude calibration circuit 44, AFE driver 46 and extended length cable 10. In order to support the receipt of standard compliant 10Base-T signals by the standard compliant 10Base-T PHY 12 after being transmitted over the extended length cable 10, the filter bank 42 must operate in a manner to predistort the transmitted signal to compensate for the channel effect. This is accomplished by having the transfer function of the filter bank 42 be selectable and/or tunable such that the overall (i.e., combined) transfer function of the region 48 is as flat as possible over the frequency range of 10Base-T communications (i.e., approximately less than 20MHz). More precisely, it would be preferred if the overall transfer function were substantially flat over the required transmission frequency range.

At initial operation of the extended length 10Base-T PHY 14 when establishing communications over the cable 10 with the standard compliant 10Base-T PHY 12, the receiver portion 14R operates to determine the estimated channel distortion. This is accomplished in one of two ways with reference to the length of the cable 10. First, a manual input 60 is provided to allow the user to select the approximate length of the cable 10 (since cable length distortion are related). Alternatively, the receiver portion 14R includes a length estimator circuit 62 that operates to monitor signals on the cable 10 and estimate the approximate length. Once a cable 10 length estimate is obtained, this distortion-related information is used to select/tune the filter bank 30 operating characteristics (more precisely, its transfer function) to meet the substantially flat transfer function goal for the region 32. With the filter bank 30 tuned in this fashion, the extended length 10Base-T PHY 14 is configured for operation over the extended length cable 10 in a manner such that the receiver portion 14R effectively compensates for the channel distortion effect introduced on the signal output from the standard compliant 10Base-T PHY 12. The cable 10 length estimate information is then further passed on to the transmitter portion 14T where the information is similarly used to select/tune the filter bank 42 operating characteristics (more precisely, its transfer function) to meet the substantially flat transfer function goal for the region 48. Having thus selectively tuned the filter bank 42, the extended length 10Base-T PHY 14 is configured for operation over the extended length cable 10 in a manner such that the transmitter portion 14T predistorts its transmitted signal to effectively compensate for the channel distortion introduced on it output signal and minimize the effect felt at the standard compliant 10Base-T PHY 12.

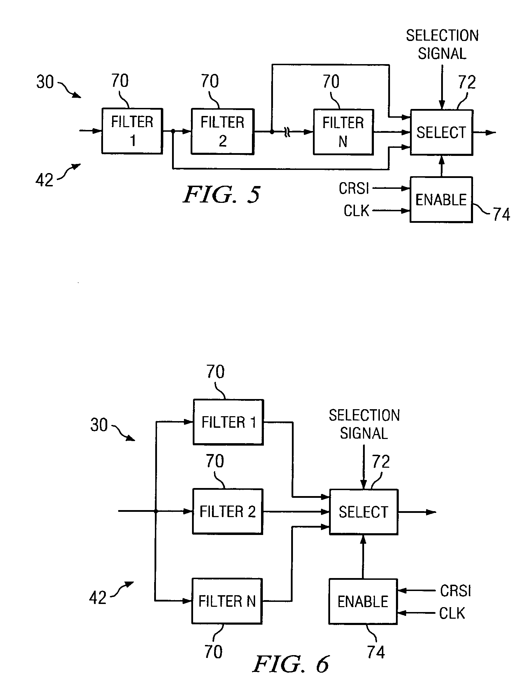

Reference is now made to FIGURES 5 and 6 wherein there are shown block diagrams for preferred embodiments of the filter banks of the extended length 10Base-T PHY 14. The selectable/tunable filter banks 30 and 42 are each implemented as a plurality of individual filters 70. The cable length estimate information is used to select which one or ones of the individual filters 70 that will be connected into the signal path and thus contribute to the overall transfer function. Any desired number of filters 70 may be included within each of the filter banks 30/42 subject to design and cost limitations. The more individual filters 70 that are available for selection when tuning the filter banks 30/42, the more accurate filter transfer function selection and the more flat the resulting overall transfer function.

For example, the individual filters 70 can be designed with transfer functions that will compensate for channel distortion associated with a certain length of cable 10 (assuming the cable exceeds the IEEE802.3 standard recognized 100 meters in length). An option, as shown in FIGURE 5, might be to have the individual filters 70 be identical and capable of compensating for the distortion in a 50 meter length of cable, such that with each additional 50 meters in estimated length beyond the initial 100 meters an additional filter 70 is added into the signal path. Similarly, the identical filters 70 could be designed for a 100 meter length of cable, in which case an additional filter would be added into the signal path for each additional 100 meters in estimated length beyond the initial 100 meters. Still further, as shown in FIGURE 6, separate filters 70 each designed for a different length cable could be provided in parallel and then selected between based on the estimated length.

To assist in the filter selection operation, each filter bank 30/42 includes a filter selector circuit 72 that responds to a selection signal by selecting which one or ones of the individual filters 70 are to be inserted into the signal path. As discussed above, that selection signal may be manually input or alternatively automatically determined in each instance based on cable 10 length estimation.

The operation of the extended length 10Base-T PHY 14 may be better understood by considering an exemplary design procedure implemented for the transceiver. Assume that the frequency transfer function of the filter bank 30/42, analog front end 28/46 and extended length cable 10 are $H_d(f)$, $H_a(f)$ and $H_c(f)$, respectively. No differentiation need be drawn between the transmitter portion 14T and the receiver portion 14R since the design principle is the same in each case. The consolidated frequency transfer function H(f) for each of the regions 32/48 (including an amplitude factor K from the amplitude calibration circuit or programmable gain amplifier) is:

$$H(f) = K \cdot H_d(f) \cdot H_a(f) \cdot H_c(f) \tag{1}$$

wherein K is either a calibration constant for the transmitter or a PGA gain for the receiver. This constant is known to the designer and it is designed in a way such that the amplitude of the transmitted 10Base-T signal is as close as possible to the IEEE802.3 standard amplitude requirement of three volts for the transmitter, or the incoming signal is amplified to a satisfactory level for the receiver. Ideally, the consolidated frequency transfer function H(f) would be:

$$H(f) = K \cdot H_d(f) \cdot H_a(f) \cdot H_c(f) = \begin{cases} 1 & 0 \leq f \leq 20MHz \\ 0 & else \end{cases} \tag{2}$$

The selection of 20MHz for the upper limit of H(f) is representative of the primary frequency distribution of a 10Base-T signal. It is preferred that the frequency response not extend past 20MHz as this could overboost high frequency noise on the channel.

It is now possible to determine the desired response for each of the compensation filter banks 30/42. Solving the previous equation for $K \cdot H_d(f)$ reveals the following:

$$K \cdot H_d(f) = \begin{cases} \dfrac{1}{H_a(f) \cdot H_c(f)} & 0 \leq f \leq 20MHz \\ 0 & else \end{cases} \tag{3}$$

If the response of the analog front end within the frequency range of 0 to 20MHz is assumed to be flat, then $H_a(f)$ can be ignored and the previous equation can be simplified to:

$$K \cdot H_d(f) = \begin{cases} \dfrac{1}{H_c(f)} & 0 \leq f \leq 20MHz \\ 0 & else \end{cases} \tag{4}$$

When implemented for the filter banks 30/42 in general, and more specifically with respect to each filter 70 therein, a low pass filter with a 20 MHz 3dB cutoff frequency can be applied to $H_d(f)$ to simplify the filter implementation while maintaining a substantially zero frequency response for frequencies in excess of 20MHz.

We next turn to the determination of $H_c(f)$ which represents the transfer function for the extended length cable 10. A 10Base-T UTP cable may be modeled as a transmission line, and can be described using four primary constants: its internal resistance (R), its conductance (G), its inductance (L) and its capacitance (C). The internal resistance is actually a complex impedance and can be modeled by:

$$R(\omega) = k_R(1 + j) \sqrt{\omega}\Omega \ per \ km \tag{5}$$

wherein $k_R$ is a constant determined by the diameter and material of the wires; and km is kilometers. The inductance and capacitance values are relatively constant at higher frequencies, and the conductance is essentially zero for UTP-3 and UTP-5 type cables. With the forgoing, the transfer function $H_c(f)$ for the cable 10 can be modeled as:

$$H(d,\omega) = e^{-d\gamma(\omega)} = e^{-da(\omega)} = e^{-jd\beta(\omega)} \tag{6}$$

wherein:

$$\gamma(\omega) = \sqrt{(R + j\omega L)(G + j\omega C)} \tag{7}$$

where $\alpha$ and $\beta$ are the attenuation and phase constants, respectively, and d is the length of the cable 10. By setting G=0 and using R($\omega$) as defined above, the previous equation may be rewritten as follows:

$$\gamma(\omega) = j\omega\sqrt{LC}\ \sqrt{1 + \frac{k_R\,(1-j)}{L\sqrt{\omega}}} \tag{8}$$

such that:

$$\alpha(\omega) = \frac{k_R}{2}\ \sqrt{\frac{\omega C}{L}} \tag{9}$$

and

$$\beta(\omega) = \omega\sqrt{LC} + \frac{k_R}{2}\ \sqrt{\frac{\omega C}{L}} \tag{10}$$

The preceding two equations (9) and (10) may then be substituted into equation (6) to determine the requisite transfer function for the filter bank based on the length d of the cable 10. In this way, the filter bank can be tuned to the proper transfer function for providing a substantially flat frequency response over the regions 32/48 by the input of the estimated or determined length d.

It will, of course, be understood that the foregoing analysis is applicable to the determination of the transfer function for one combined compensation filter 70 for each of the filter banks. As discussed above, a preferred implementation would utilize a set of cascaded filters 70 within each filter bank, with each filter having an identical frequency response, so that the transceiver can be connected to varying length cables 10. By properly choosing the length of cable for which each filter 70 can provide compensation, the anticipated overall length of the cable 10 can then be compensated for through the proper selection of an integer multiple number of filters 70. Even with this scenario, the equations (6), (9) and (10) are used to determine the frequency response of an individual filter 70 in the bank. That individual filter 70 may then be replicated the requisite number of times (as set by the integer value) and connected in the disclosed cascade manner within the filter bank.

As a further alternative, a different compensation length for filter 70 could be selected to calculate the transfer function for the filter associated with each one of a predetermined number of possible lengths for the cable 10. The resulting filters 70 would then be implemented separately (in parallel, as disclosed) for the filter bank and chosen properly based on the estimated length of the cable 10 as discussed previously.

Reference is now once again made to FIGURE 5. As discussed above; each filter bank 30/42 includes a filter selector circuit 72 that responds to a selection signal by selecting which one or ones of the individual filters 70 are to be inserted into the signal path. In particular, the filter bank 30 for the receiver portion 14R receives a selection signal generated from either a manual input 60 (which allows the user to select the approximate length) or a length estimator circuit 62 (which performs the selection automatically). The filter bank 42 then receives its selection signal from the filter bank 30.

With respect to the length estimator circuit 62, and giving consideration to equations (6)-(10), the transfer function gain (in dB) of the cable 10 is given by:

$$H_{dB}(d,f) = 20\log_{10}|H(d,f)| = \frac{-20}{\ln 10}d\alpha f = -8.686d \times k_R\sqrt{\frac{\pi f C}{2L}} \tag{11}$$

from which one can solve for the cable length d as follows:

$$d = \frac{H_{dB}(d,f)}{8.686 \times k_R \sqrt{\dfrac{\pi fC}{2L}}} \tag{12}$$

In this way, once an estimate of the attenuation of the 10Base-T signal is determined, equation (12) allows for the determination (or estimation) of the cable 10 length. The attenuation of the cable can be accurately estimated by examination of the preamble of the 10Base-T signal at the beginning of a communication. The foregoing estimation processes are performed by the length estimator circuit 62.

To assist in the length estimator circuit 62 processing operations, an enable circuit 74 is used to disable operation of the filter selector circuit 72 in the receiver portion 14R until after the preamble of the ethernet packet is received and processed by the length estimator circuit 62 in connection with the making of the length selection. This circuit 74 receives a carrier sense (CRSI) signal indicative of the detection of an incoming signal. Responsive thereto, the circuit 74 starts a timer, and only when that timer expires (at the end of the preamble period) is the enable signal output to allow for the filter selector circuit 72 choose the filter configuration (i.e., tune or select) of the filter bank 30. The selection signal is then passed on to the filter bank 42. At this point, the transfer functions of the filter banks 30/42 of the extended length 10Base-T PHY 14 will have been properly tuned such that the overall (i.e., combined) transfer function of the regions 32/48 is as flat as possible over the frequency range of 10Base-T communications.

While the preferred embodiments are disclosed in the context of a 10Base-T ethernet communications environment, it will be understood that the extended range principles taught herein are equally applicable with appropriate modifications to any xBase-T ethernet communications system (i.e., 10Base-T, 100Base-T and 1000Base-T, and the like). Although preferred embodiments of the method and apparatus of the present invention have been illustrated in the accompanying Drawings and described in the foregoing Detailed Description, it will be understood that the invention is not limited to the embodiments disclosed, but is capable of numerous rearrangements, modifications and substitutions without departing from the spirit of the invention as set forth and defined by the following claims:

**Claims**

1. A long reach transceiver for connection to a cable of a certain length, comprising:

   a transmitter path including a first filter, the first filter having a first transfer function selectively tuned to effectuate a predistortion of a transmit signal that compensates for a channel effect caused by signal transmission over the certain length cable; and
   a receiver path including a second filter, the second filter having a second transfer function selectively tuned to operate on a receive signal in a manner such that it compensates for the channel effect caused by signal transmission over the certain length cable.

2. The transceiver as in claim 1 wherein the first and second transfer functions for the first and second filters, respectively, after being selectively tuned are substantially the same.

3. The transceiver as in claim 1 or 2 further including a circuit associated with each of the first and second filters for effectuating the selective tuning of the first and second transfer functions, respectively.

4. The transceiver as in claim 3 wherein each circuit operates responsive to an estimation of cable length for the implementing the selective tuning of the first and second transfer functions.

5. A long reach transmitter for connection to an unshielded twisted pair cable of a certain length, comprising:

   a transmitter path including a filter, the filter having a transfer function selectively tuned to effectuate a predistortion of a transmit signal that compensates for a channel effect caused by signal transmission over the certain length cable.

6. A long reach receiver for connection to an unshielded twisted pair cable of a certain length, comprising:

   a receiver path including a filter, the filter having a transfer function selectively tuned to operate on a receive signal in a manner such that it compensates for the channel effect caused by signal transmission over the certain length cable.

7. The receiver as in any preceding claim wherein the cable comprises an ethernet 10Base-T cable and the certain length comprises a length in excess of 100 meters.

8. The transceiver as in claim 7 wherein the certain length is in excess of 200 metres.

9. The receiver as in any preceding claim further including a circuit that operates to selectively tune of the transfer function based on an estimated length of the cable.

10. The receiver as in claim 4 or any claim appended thereto or claim 9 wherein the estimation of cable length is manually input or automatically determined.

11. The transceiver as in claim 10 further including a circuit operable to monitor the receiver path in order to make the cable length estimation determination automatically.

12. The transceiver as in claim 11 wherein the circuit operates to monitor an initial communication over the cable.

13. The transceiver as in claim 12 wherein the initial communication is a preamble 10Base-T communication.

14. The transceiver as in any preceding claim wherein the transceiver is implemented on an integrated circuit chip.

15. An xBase-T communications system, comprising:

    a standard compliant xBase-T PHY;
    an unshielded twisted pair communications cable having an extended length which introduces channel effects on transmit/receive signals which are unacceptable from the perspective of the standard compliant xBase-T PHY; and
    an extended length xBase-T PHY including:

    a transmitter path including a first compensation circuit operable to predistort a transmit signal to compensate for the channel effects introduced by the extended length unshielded twisted pair communications cable; and
    a receiver path including a second compensation circuit operable to compensate a receive signal for the channel effects introduced by the extended length unshielded twisted pair communications cable.

16. The system of claim 15 wherein the standard compliant xBase-T PHY is an IEEE802.3 10Base-T PHY.

17. The system of claim 15 or 16 wherein the at least one of the first and second compensation circuits comprises:

    a plurality of filters; and
    a selection circuit operable to selectively connect certain ones of the plurality of filters into the transmitter path or receiver path to present a transfer function that, when combined with a cable transfer function, presents a substantially flat frequency response.

18. The system as in claim 17 wherein at least one of the selection circuit selectively connects filters to tune the transfer function based on an estimated length of the cable.

19. A method, comprising the steps of:

    transmitting a first signal over a first unshielded twisted pair cable having a first cable transfer function dependent on first cable length, the step of transmitting including the step of filtering the signal with a transfer function selected based on the first cable length that when combined with the first cable transfer function presents a substantially flat frequency response; and
    receiving a second signal over a second unshielded twisted pair cable having a second cable transfer function dependent on second cable length, the step of receiving including the step of filtering the signal with a transfer function selected based on the second cable length that when combined with the second cable transfer function presents a substantially flat frequency response.

20. The method of claim 19 wherein the recited steps of filtering each include the step of selectively tuning a filter to have a requisite transfer function for presenting the substantially flat frequency response.

**21.** A method, comprising the steps of:

transmitting a first signal over a first unshielded twisted pair cable having a first cable length, the step of transmitting including the step of predistorting the first signal to compensate for channel effects introduced by the first length cable; and
receiving a second signal over a second unshielded twisted pair cable having a second cable length, the step of receiving including the step of compensating the second signal for the channel effects introduced by the second length cable.

**22.** The method of claim 21 wherein the step of predistorting comprises the step of passing the transmit signal through a filter having a transfer function selected based on the first cable length, the filter transfer function when combined with a transfer function of the first length cable presenting a substantially flat frequency response.

**23.** The method of claim 22 wherein the step of passing includes the step of selectively tuning the filter to have a requisite transfer function for presenting the substantially flat frequency response.

**24.** The method of claim 21, 22 or 23 wherein the step of compensating comprises the step of passing the receive signal through a filter having a transfer function selected based on the second cable length, the filter transfer function when combined with a transfer function of the second length cable presenting a substantially flat frequency response.

**25.** The method of claim 24 wherein the recited step of passing includes the step of selectively tuning the filter to have a requisite transfer function for presenting the substantially flat frequency response.

FIG. 1
(PRIOR ART)

FIG. 2

FIG. 3

FIG. 4

FILTER
1

FILTER
2

FILTER
N

SELECT

ENABLE

SELECTION
SIGNAL

CRSI

CLK

30

42

70

70

70

72

74

*FIG. 5*

FILTER 1

FILTER 2

FILTER N

SELECT

ENABLE

SELECTION
SIGNAL

CRSI

CLK

30

42

70

70

70

72

74

*FIG. 6*